# EUROPEAN PATENT SPECIFICATION

(11) **EP 2 784 467 B1**
(45) Date of publication and mention of the grant of the patent: **06.05.2020**
(21) Application number: 13382121.5
(22) Date of filing: 27.03.2013
(51) Int. Cl.: G01M 13/02

(54) **Generator Test Benches and Back-To-Back Testing Systems and Methods**
Generatorprüfbänke und Back-to-Back-Testsystem und -verfahren
Générateur de bancs d'essai et systèmes et procédés de test de dos à dos

(43) Date of publication of application: 01.10.2014
(73) Proprietor: GE Renewable Technologies Wind B.V., 4817 PA Breda (NL)
(72) Inventor: Prats Mustarós, Josep, 08001 BARCELONA (ES)
(74) Representative: de Rooij, Mathieu Julien

(56) References cited:
- WO-A1-2012/134459
- CN-U- 201 562 042

## Description

The present disclosure relates to electricity generators and more particularly to test benches for testing generators as well as to methods and systems of back-to-back testing of electricity generators.

### BACKGROUND ART

Electricity generators, such as wind turbine generators, may require extensive testing before being deployed at an electricity generation plant, such as a wind turbine. One known way of testing generators is in a back-to-back testing system. In typical back-to-back testing systems two generators are mounted on a testing configuration known as a test bench. In a back-to-back arrangement, one generator functions as a drive motor and the other as a generator. The two generators are mechanically coupled via, e.g., a shaft. The power produced by the generator is "given back" to the supply of the drive motor. In this way the only power required is the power to compensate for the losses during the testing process.

Typically, a back-to-back test bench includes separate supports for each of the generators and a coupling between them. Each support is typically attached at one end to the stator of the respective generator and at the other end it is fixed to the ground. A shaft between the two generators is used for transmitting torque from the first generator to the second generator.

When the first generator is arranged in a motor configuration, the shaft transmits torque from the rotor of the first generator to the rotor of the second generator. However, as the rotors rotate, each generator transmits torque to the foundation of its respective support. This implies that the supports are subjected to great loads during testing mode. Therefore, the respective supports have to be designed strong enough to withstand such loads. As a consequence, manufacturing cost is significant both in terms of body of material as well as in terms of selecting the appropriate material to provide the required structural integrity. Another problem that these test benches face is that it can be difficult to align the two generators. The respective supports must be perfectly aligned with each other and with the shaft. Even minor misalignments may cause undesired vibration and loads during testing that may affect the test results, and/or the integrity of the test bench and may even damage the generators. A generator test bench is disclosed in the patent document CN 201 562 042U.

### SUMMARY OF THE INVENTION

There is a need for a new test bench that at least partially resolves some of the above mentioned problems. It is an object of the present invention to fulfill such a need. The invention consists of a test bench for testing a generator as defined in claim 1, a back-to-back testing system as defined in claim 7 and a method for testing generators as defined in claim 13.

In a first aspect of the invention a generator test bench for a back-to-back testing system is disclosed. The test bench may comprise a fixed structure and a shaft. The fixed structure may comprise a common base fixed to the ground, a hollow body and a central pillar. The hollow body may have a first opening and a second opening. The central pillar may connect the common base with the hollow body. The shaft may be arranged inside the hollow body and may have a first end extending beyond the first opening and a second end extending beyond the second opening. The first end of the shaft may be connectable to a first rotor of a first generator and the second end of the shaft may be connectable to a second rotor of a second generator. The fixed structure may be connectable to the stators of said first and second generators. The shaft may be supported directly by the fixed structure by bearings.

By providing a common base to the test bench, the torque that would otherwise be transmitted to the ground (and foundation) may now be transmitted directly to the other generator through the common base. Therefore the test bench requires less reinforcement than otherwise as substantially less torque is transmitted to the ground.

By arranging the shaft inside the hollow body the alignment process is very easy as the rotors of the generators are directly attached at the ends of the shaft and any deformation of the test bench structure may be applied to all the components at the same time.

In some embodiments, the first opening may define a first flange and the second opening may define a second flange, the first flange being connectable to the stator of the first generator and the second flange being connectable to the stator of the second generator. The shaft may be arranged to traverse a space in the center of each generator.

By arranging the shaft to traverse a space in the center of the generators, it is possible to couple the shaft to the generator rotors from the external sides of the back to back arrangement, i.e. the sides facing away from the hollow body. In these embodiments no torque may be transmitted to the ground as the stators are attached to the same hollow structure of the shaft, yet from opposite sides. As a consequence the torque of one generator may be counter-acted by the torque of the other generator, and vice versa. Furthermore, such an arrangement may allow minimization of the size of the test bench, as the loads transmitted to the foundations are minimized. It further may allow for a compact test bench that may be transportable. This has the benefit that the test benches may be manufactured at one site and be moved closer to the actual operating site for testing. Such a process can provide significant savings in terms of transportation and operational costs.

In some embodiments, the hollow body may be cylindrical. This may facilitate coupling of the hollow body to the stators, as stators typically tend to be arranged in a circular configuration. The test bench may then further comprise at least a bearing inside the hollow body for coupling the shaft to the hollow body. This may ensure that the shaft remains concentric with the hollow body and may mitigate the loads on the shaft from the two ends to the whole surface of the hollow body.

In some embodiments, the test bench may further comprise a first shaft connector coupled at a first point to the first end of the shaft and a second shaft connector coupled at a first point to the second end of the shaft. The first and second shaft connectors may be connectable to the first and second rotors, respectively, at a second point. Furthermore, the shaft connectors may also comprise an elastic coupling for providing the shaft connectors with resiliency. Elastic shaft connectors may reduce the transmission of bending loads from the shaft to the generators and vice versa.

In another aspect of the invention a back-to-back (B2B) testing system is disclosed. The B2B testing system may comprise a test bench according to any of the embodiments hereinbefore described, a pair of converters, each arranged to be electrically connectable to a generator. The B2B testing system may further comprise a first generator, arranged in a motor configuration, a slip ring for transmitting the torque of the first generator to the shaft and a second generator arranged in a generator configuration. The generators may be direct-drive generators and each may comprise a central space. The converters may be coupled through a transformer. The transformer may be used to stabilize the input voltage of the first generator. The converters may be power electronic converters. The use of power electronic converters may further reduce the size of the back-to-back system. The back-to-back system may further include a controller for controlling at least speed and torque of the generators.

An advantage of arrangements according to the invention is that the load path between both generator, both for the stator connection and the rotor connection may be very short resulting in higher stiffness and improved dynamics for the whole arrangement.

In another aspect of the invention a method of testing generators in a back-to-back testing system is disclosed. In a first step a first generator may be mounted on a test bench according to the first aspect of the invention. Next, a second generator may be mounted on the test bench. In a third step, the first generator may be driven as a motor. Finally, the second generator may be tested. When the testing of the second generator has been concluded, the roles of the first generator and the second generator may be exchanged, i.e.. the second generator may be driven as a motor so that the first generator may be tested.

The method has the advantage that the use of a test bench allows for easy mounting and unmounting of the generators without requiring rigorous alignment processes. Consequently, the time required to set up the testing process is minimized.

In some embodiments, the method may further comprise the steps of providing information from a set of sensors installed in both generators, selecting a pre-established pattern of testing and testing the generators in response to said information provided and said selected pre-established pattern.

This ensures minimum intervention from the test personnel as the whole testing process is automated.

In some embodiments, the method may further comprise gathering test result information by sensors in the generators and storing said test result information as a footprint of the tested generator. The test result information may include at least one of instantaneous speed, power, voltage, current, airgap, vibration or temperature of the tested generator. The footprint of the tested generator may then be used during installation and maintenance to optimize the operational parameters of the generator when the generator is deployed in production.

### BRIEF DESCRIPTION OF THE DRAWINGS

Particular embodiments of the present invention will be described in the following by way of non-limiting examples, with reference to the appended drawings, in which:
Fig. 1 shows a B2B arrangement for direct drive generators of a first type according to an implementation.
FIG. 1A shows a B2B arrangement for direct drive generators of the first type according to a second implementation.
FIG. 2 shows a B2B arrangement for direct drive generators of a second type according to a third implementation.

### DETAILED DESCRIPTION OF EMBODIMENTS

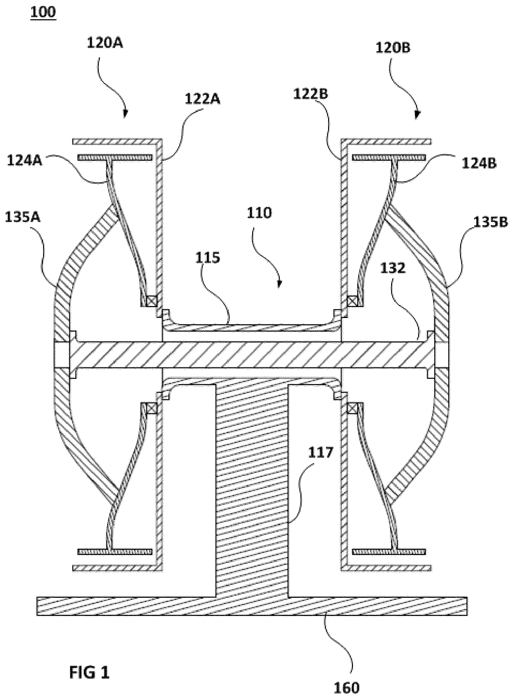

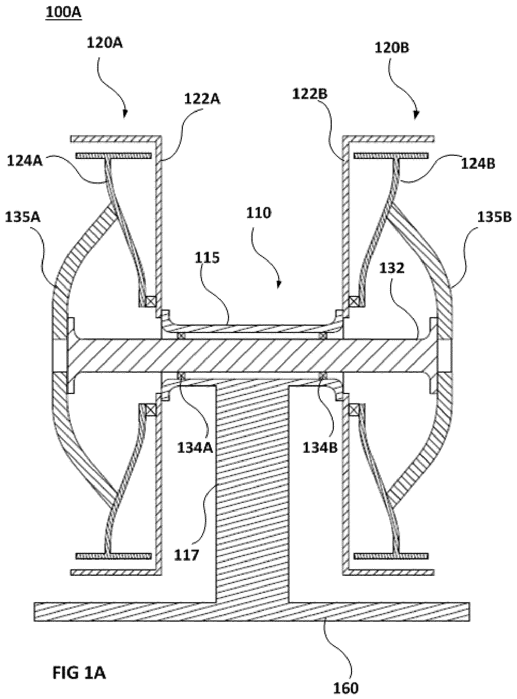

Fig. 1 shows a B2B arrangement according to an implementation. B2B arrangement 100 may comprise a test bench 110, a first generator 120A and a second generator 120B. The two generators may be of a first direct-drive type, i.e. in normal use they may be directly driven.

The direct drive generators of the first type may be disc shaped with concentric stator and rotor and may comprise a central hole in the center. The stators in the first type direct-drive generators remain fixed around rotating rotors 124A, 124B. Each generator may be connected to a converter (not shown), the converters being connected via a common transformer (not shown). The first generator 120A may be driven as a motor. The rotors of the two generators may be mounted so that their sides are not facing each other.

The test bench 110 may comprise a common base 160, a hollow body 115, a support pillar 117 between the common base 160 and the hollow body 115, and a shaft 132. A pair of connectors 135A, 135B may couple the shaft with the generators. The hollow body 115 may be arranged between the stators 122A, 122B of the generators 120A and 120B, respectively. The hollow body 115 may be shaped as a hollow cylinder. The one side of the hollow body 115 may be fixed to the stator 122A of the first generator 120A. The other side of the hollow body may be fixed to the stator 122B of the second generator 120B. The shaft 132 may traverse and extend beyond either side of the hollow body 115 and from the central holes of the two generators.

A first connector 135A may be attached at one end of shaft 132 at a first point. The one end of shaft 132 may be attached, for example, to the inner center of connector 135A, as shown in Fig. 1. The first connector 135A may be flexibly attached at a second point, or at a plurality of points, to the rotor 124A of the first generator 120A. Accordingly, a second connector 135B may be attached at the other end of shaft 132 at a first point. The other end of shaft 132 may be attached, for example, to the inner center of connector 135B, as shown in Fig. 1. The second connector 135B may be flexibly attached at a second point, or at a plurality of points, to the rotor 124B of second generator 120B.

During a back-to-back testing process, the rotor 124A of the first generator 120A starts rotating in a first direction and transmits torque via the stator 122A to the hollow body 115. As the shaft 132 rotates, the rotor 124B of second generator 120B starts to rotate and transmits torque via the stator 122B to the hollow body 115. From a certain point of view, one end of shaft 132 may be considered to rotate clockwise and the other anticlockwise. Accordingly, one rotor may rotate clockwise and the other anticlockwise. Consequently, the torque applied to the first generator is opposite to the torque applied to the second generator. Therefore, the resulting torques are offset and negligible or no torque at all is transmitted to the foundations or to the ground via the common base.

Furthermore, mounting and alignment of the two generators is very easy. First the stators 122A, 122B may be fixed to the hollow body 115 independently. Then the shaft may be introduced in the central hole of one of the generators, passes through the hollow body and through the hole of the second generator. Finally, the rotors may be flexibly attached to the shaft 132 with the connectors 135A, 135B. The test bench 110 of Fig. 1 is compact and requires significantly less material compared to the prior art, as no torque is transmitted to the ground. Therefore the loads are distributed between the two generators and the efficiency of the testing process can be maximized.

FIG. 1A shows a B2B arrangement similar to the one in FIG. 1, with the only difference that a pair of bearings 134A, 134B is arranged inside the hollow body 115, between the shaft 132 and the inner surface of the hollow body 115. The purpose of the bearings is to mitigate any oscillations caused by the first generator 120A to pass to the second generator 120B via the shaft 132. Furthermore, it facilitates mounting of the generators 120A, 120B as the shaft 132 may be introduced in the hollow body before mounting of the stators because the shaft is retained in the center of the hollow body 115 by the bearings 134A, 134B. Additionally, the loads of the generators on the hollow body 115 due to their weight and torque are more evenly distributed along the hollow body.

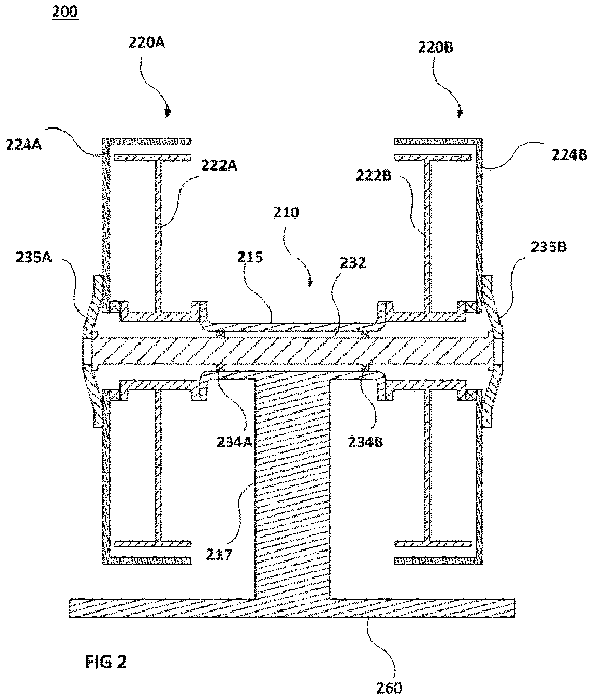

FIG. 2 shows a B2B arrangement for direct drive generators of a second type according to an implementation. The direct drive generators of the second type may also be disc shaped with concentric stator and rotor. In the second type generators, the rotor (224A, 224B) may rotate around the stator (222A, 222B).

A test bench 210 comprises a hollow body 215, a common base 260, a central pillar 217 connecting the hollow body 215 with the common base 260, and a shaft 232. The one side of the hollow body 215 may be fixed to the stator 222A of the first generator 220A. The other side of the hollow body may be fixed to the stator 222B of the second generator 220B. The shaft 232 may traverse and extend beyond either side of the hollow body 215 and from the central holes of the two generators 220A, 220B.

A first connector 235A may be attached at one end of shaft 232 at a first point. The one end of shaft 232 may be attached to the center of the first connector 235A. The first connector 235A may be flexibly attached at a second point, or at a plurality of points, to the rotor 224A of first generator 220A. Accordingly, a second connector 235B may be attached at the other end of shaft 232 at a first point. The other end of shaft 232 may be attached to the center of the second connector 235B. The second connector 235B may be flexibly attached at a second point, or at a plurality of points, to the rotor of second generator 220B. A pair of bearings 234A, 234B may be arranged inside the hollow body 215, between the shaft 232 and the inner surface of the hollow body 215, similarly to the embodiment of Fig. 1A.

The B2B arrangement of Fig. 2 functions in the same way as the arrangements of Fig. 1 and Fig. 1A. During a B2B testing process, the resulting torques are offset for the same reasons given with reference to Fig. 1. Accordingly, the mounting process ensures that the two generators are aligned.

The connectors shown in Fig. 1-2, are mere examples of connectors between a shaft and a rotor. Any suitable type of connector may be used for coupling the shaft with the rotors provided that the coupling between the connector and the rotor has a certain elasticity that allows smooth transfer of torque from the shaft to the rotor or from the rotor to the shaft.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A test bench for testing a generator before being deployed at a wind turbine, the test bench comprising:
(i) a fixed structure, having
a common base (160) fixed to the ground;
a hollow body (115), having a first opening and a second opening;
a central pillar (117) connecting the common base with the hollow body;
(ii) a shaft (132), arranged inside the hollow body, having a first end extending beyond the first opening and a second end extending beyond the second opening,
wherein the first end of the shaft is connectable to a first rotor (124A) of a first generator (120A) and the second end of the shaft is connectable to a second rotor (124B) of a second generator (120B), and
wherein the fixed structure is connectable to the stators (122A, 122B) of said first and second generators in a way that one side of the hollow body (115) is connectable to the stator (122A) of the first generator (120A) and the other side of the hollow body is connectable to to the stator (122B) of the second generator (120B).

2. The test bench according to claim 1, wherein the first opening defines a first flange and the second opening defines a second flange, the first flange being connectable to the stator of the first generator and the second flange being connectable to the stator of the second generator.

3. The test bench according to claim 2, wherein the shaft is arranged to traverse a space in the center of each generator.

4. The test bench according to any of claims 1 to 3, wherein the hollow body is at least partially cylindrical.

5. The test bench according to claim 4, further comprising at least one bearing inside the hollow body for coupling the shaft to the hollow body.

6. The test bench according to any of claims 1 to 5, further comprising:
a first shaft connector coupled at a first point to the first end of the shaft, and
a second shaft connector coupled at a first point to the second end of the shaft,
wherein said first and second connectors are connectable to the first and second rotors, respectively, at a second point.

7. A back-to-back testing system comprising,
a test bench according to any of claims 1 to 6; and
a pair of converters, each arranged to be electrically connectable to a generator.

8. A back-to-back testing system according to claim 7, wherein the converters are power electronic converters.

9. The back-to-back testing system according to any of claims 7 and 8, further comprising a controller, adapted to control at least speed and torque of the generators.

10. A back-to-back testing system according to any of claims 7-9, further comprising:
a first generator, arranged in a motor configuration;
a slip ring for transmitting the torque of the first generator to the shaft; and
a second generator arranged in a generator configuration.

11. The back-to-back testing system according to claim 10, wherein the generators are direct-drive generators and each comprises a central space.

12. The back-to-back testing system according to claim 10 or 11, wherein the rotors of the generators are flexibly coupled to the shaft.

13. A method of testing generators in a back-to-back testing system according to claims 7 to 12, comprising:
mounting a first generator on the test bench;
mounting a second generator on the test bench;
driving the first generator as a motor; and
testing the second generator.

14. The method according to claim 13, further comprising:
driving the second generator as a motor;
testing the first generator.

15. The method according to claim 13 or 14, further comprising:
providing information from a set of sensors installed in both generators;
selecting a pre-established pattern of testing;
testing the generators in response to said information provided and said selected pre-established pattern.

16. The method according to claim 15, further comprising:
gathering test result information by sensors in the generators, said test result information including at least one of instantaneous speed, power, voltage, current, airgap, vibration or temperature of the tested generator.
storing said test result information as a footprint of the tested generator.

## Patentansprüche

1. Prüfstand zum Prüfen eines Generators vor dem Einsatz in einer Windkraftanlage, wobei der Prüfstand Folgendes umfasst:
(i) eine feste Struktur mit
einer gemeinsamen Basis (160), die am Boden befestigt ist;
einem Hohlkörper (115) mit einer ersten und einer zweiten Öffnung;
einer zentralen Säule (117), welche die gemeinsame Basis mit dem Hohlkörper verbindet;
(ii) einer Welle (132), die innerhalb des Hohlkörpers angeordnet ist und ein erstes Ende aufweist, das sich über die erste Öffnung hinaus erstreckt, sowie ein zweites Ende, das sich auch über die zweite Öffnung hinaus erstreckt,
wobei das erste Ende der Welle mit einem ersten Rotor (124A) eines ersten Generators (120A) verbindbar ist und das zweite Ende der Welle mit einem zweiten Rotor (124B) eines zweiten Generators (120B) verbindbar ist und
wobei die feste Struktur derart mit den Statoren (122A, 122B) des ersten und des zweiten Generators verbindbar ist, dass sich eine Seite des Hohlkörpers (215) mit dem Stator (222A) des ersten Generators (220A) und die andere Seite des Hohlkörpers mit dem Stator (222B) des zweiten Generators (220B) verbinden lässt.

2. Prüfstand nach Anspruch 1, wobei die erste Öffnung einen ersten Flansch und die zweite Öffnung einen zweiten Flansch vorgibt und wobei der erste Flansch mit dem Stator des ersten Generators und der zweite Flansch mit dem Stator des zweiten Generators verbindbar ist.

3. Prüfstand nach Anspruch 2, wobei die Welle so angeordnet ist, dass sie einen Raum in der Mitte jedes Generators durchquert.

4. Prüfstand nach einem der Ansprüche 1 bis 3, wobei der Hohlkörper zumindest teilweise zylindrisch ist.

5. Prüfstand nach Anspruch 4, wobei außerdem im Inneren des Hohlkörpers mindestens ein Lager zum Ankoppeln der Welle an den Hohlkörper vorgesehen ist.

6. Prüfstand nach einem der Ansprüche 1 bis 5, der ferner Folgendes umfasst:
einen ersten Wellenverbinder, der an einem ersten Punkt an das erste Ende der Welle gekoppelt ist, und
einen zweiten Wellenverbinder, der an einem ersten Punkt an das zweite Ende der Welle gekoppelt ist,
wobei der erste und der zweite Verbinder an einem zweiten Punkt mit dem ersten bzw. dem zweiten Rotor verbindbar sind.

7. Back-to-Back-Testsystem, das Folgendes umfasst:
Prüfstand nach einem der Ansprüche 1 bis 6; und
ein Paar von Wandlern, die jeweils so angeordnet sind, dass sie mit einem Generator elektrisch verbindbar sind.

8. Back-to-Back-Testsystem nach Anspruch 7, wobei die Wandler leistungselektronische Wandler sind.

9. Back-to-Back-Testsystem nach einem der Ansprüche 7 oder 8, ferner mit einer Steuerung versehen, die dazu ausgelegt ist, mindestens die Drehzahl und das Drehmoment der Generatoren zu steuern.

10. Back-to-Back-Testsystem nach einem der Ansprüche 7 bis 9, das ferner Folgendes umfasst:
einen ersten Generator, der in einer Motorkonfiguration angeordnet ist;
einen Schleifring zum Übertragen des Drehmoments des ersten Generators auf die Welle; und
einen zweiten Generator, der in einer Generator-Konfiguration angeordnet ist.

11. Back-to-Back-Testsystem nach Anspruch 10, wobei die Generatoren direkt angetriebene Generatoren sind und jeweils einen zentralen Raum umfassen.

12. Back-to-Back-Testsystem nach Anspruch 10 oder 11, wobei die Rotoren der Generatoren flexibel an die Welle gekoppelt sind.

13. Verfahren zum Testen von Generatoren in einem Back-to-Back-Testsystem nach den Ansprüchen 7 bis 12, wobei das Verfahren Folgendes umfasst:
die Montage eines ersten Generators auf dem Prüfstand;
die Montage eines zweiten Generators auf dem Prüfstand;
den Antrieb des ersten Generators als Motor; und
das Testen des zweiten Generators.

14. Verfahren nach Anspruch 13, das ferner Folgendes umfasst:
den Antrieb des zweiten Generators als Motor;
das Testen des ersten Generators.

15. Verfahren nach Anspruch 13 oder 14, das ferner Folgendes umfasst:
Bereitstellung von Informationen aus einer Reihe von Sensoren, die in beiden Generatoren installiert sind;
Auswahl eines vorab festgelegten Testmusters;
Testen der Generatoren als Reaktion auf die bereitgestellten Informationen und auf das ausgewählte, vorab festgelegte Muster.

16. Verfahren nach Anspruch 15, das ferner Folgendes umfasst:
Sammeln von Testergebnis-Informationen mittels Sensoren in den Generatoren, wobei diese Ergebnisse mindestens einen der folgenden Parameter des getesteten Generators umfassen: Momentangeschwindigkeit, Leistung, Spannung, Stromstärke, Luftspalt, Vibration oder Temperatur.
Speichern der Testergebnis-Informationen als charakteristisches Profil des getesteten Generators.

## Revendications

1. Banc d'essai pour tester un générateur avant d'être déployé sur une éolienne, le banc d'essai comprenant :
(i) une structure fixe, ayant
une base commune (160) fixée au sol ;
un corps creux (115), ayant une première ouverture et une seconde ouverture ;
un pilier central (117) reliant la base commune au corps creux ;
(ii) un arbre (132), disposé à l'intérieur du corps creux, ayant une première extrémité s'étendant au-delà de la première ouverture et une deuxième extrémité s'étendant au-delà de la deuxième ouverture,
dans lequel la première extrémité de l'arbre peut être reliée à un premier rotor (124A) d'un premier générateur (120A) et la seconde extrémité de l'arbre peut être reliée à un second rotor (124B) d'un second générateur et (120B) et
dans lequel la structure fixe peut être reliée aux stators (122A, 122B) desdits premier et second générateurs de manière à ce qu'un côté du corps creux (215) puisse être relié au stator (222A) du premier générateur (220A) et à ce que l'autre côté du corps creux puisse être relié au stator (222B) du second générateur (220B).

2. Banc d'essai selon la revendication 1, dans lequel la première ouverture définit une première bride et la seconde ouverture définit une seconde bride, la première bride pouvant être reliée au stator du premier générateur et la seconde bride pouvant être reliée au stator du second générateur.

3. Banc d'essai selon la revendication 2, dans lequel l'arbre est agencé pour traverser un espace au centre de chaque générateur.

4. Banc d'essai selon l'une quelconque des revendications 1 à 3, dans lequel le corps creux est au moins partiellement cylindrique.

5. Banc d'essai selon la revendication 4, comprenant en outre au moins un palier à l'intérieur du corps creux pour coupler l'arbre au corps creux.

6. Banc d'essai selon l'une quelconque des revendications 1 à 5, comprenant en outre :
un premier connecteur d'arbre couplé en un premier point à la première extrémité de l'arbre et
un second connecteur d'arbre couplé en un premier point à la seconde extrémité de l'arbre,
dans lequel lesdits premier et second connecteurs peuvent être reliés aux premier et second rotors, respectivement, en un second point.

7. Système de test consécutif comprenant,
un banc d'essai selon l'une quelconque des revendications 1 à 6 ; et
une paire de convertisseurs, chacun étant agencé pour pouvoir être électriquement connecté à un générateur.

8. Système de test consécutif selon la revendication 7, dans lequel les convertisseurs sont des convertisseurs électroniques de puissance.

9. Système de test consécutif selon l'une quelconque des revendications 7 et 8, comprenant en outre un contrôleur, apte à commander au moins la vitesse et le couple des générateurs.

10. Système de test consécutif selon l'une quelconque des revendications 7 à 9, comprenant en outre :
un premier générateur, disposé dans une configuration de moteur ;
une bague collectrice pour transmettre le couple du premier générateur à l'arbre ; et
un second générateur disposé dans une configuration de générateur.

11. Système de test consécutif selon la revendication 10, dans lequel les générateurs sont des générateurs à entraînement direct et comprennent chacun un espace central.

12. Système de test consécutif selon la revendication 10 ou 11, dans lequel les rotors des générateurs sont couplés de manière flexible à l'arbre.

13. Procédé de test de générateurs dans un système de test consécutif selon les revendications 7 à 12, comprenant :
monter un premier générateur sur le banc d'essai ;
monter un second générateur sur le banc d'essai ;
entraîner le premier générateur comme moteur ; et
tester le second générateur.

14. Procédé selon la revendication 13, comprenant en outre :
entraîner le second générateur en tant que moteur ;
tester le premier générateur.

15. Procédé selon la revendication 13 ou 14, comprenant en outre :
fournir des informations à partir d'un ensemble de capteurs installés dans les deux générateurs ;
sélectionner un modèle de test préétabli ;
tester les générateurs en réponse auxdites informations fournies et audit modèle préétabli sélectionné.

16. Procédé selon la revendication 15, comprenant en outre :
recueillir des informations de résultat de test par des capteurs dans les générateurs, lesdites informations de résultat de test comprenant au moins l'une parmi la vitesse instantanée, la puissance, la tension, le courant, l'entrefer, les vibrations ou la température du générateur testé.
stocker lesdites informations de résultat de test en tant qu'empreinte du générateur testé.
